# EUROPEAN PATENT SPECIFICATION

(11) **EP 1 779 004 B1**
(45) Date of publication and mention of the grant of the patent: **16.12.2009**
(21) Application number: 04774878.5
(22) Date of filing: 13.08.2004
(51) Int. Cl.: F16H 61/00, F16H 57/04

(54) **CONTINUOUSLY VARIABLE TRANSMISSION PROVIDED WITH A SET OF HYDRAULIC PUMPS**
STUFENLOSES GETRIEBE MIT EINEM SATZ HYDRAULISCHER PUMPEN
BOITE DE VITESSES A VARIATION CONTINUE EQUIPEE D'UN ENSEMBLE DE POMPES HYDRAULIQUES

(43) Date of publication of application: 02.05.2007
(73) Proprietor: ROBERT BOSCH GMBH, 70442 Stuttgart (DE)
(72) Inventor: VAN DER SLUIS, Francis, Maria, Antonius, NL-5271 HP Sint-Michielsgestel (NL)
(74) Representative: Plevier, Gabriel Anton Johan Maria
(86) International application number: PCT/NL2004/000571
(87) International publication number: WO 2006/016797

(56) References cited:
- EP-A- 0 764 799
- EP-A- 0 826 910
- EP-A- 1 348 894

## Description

The present invention relates to a continuously variable transmission as defined in the preamble of the following claim 1.

Such a continuously variable transmission is generally known, and e.g. described by patent publication EP-A-0 764 799 in the name of Applicant. The known continuously variable transmission, which may be one of several known types, provides a transmission ratio that may be controlled to an arbitrary value within a range of transmission ratios covered by said transmission by an appropriate actuation thereof. Such actuation of the transmission usually requires a relatively large flow of hydraulic medium at a relatively high pressure level. Although such a high pressure level per se may be realised and controlled without extraordinary difficulty in the known transmission, it is particularly the large flow of hydraulic medium that is required for dynamic operation of the transmission, i.e. for changing its transmission ratio, that poses a significant strain to the lay-out and/or components of the hydraulic system of the transmission. Such strain is all the more felt where a hydraulic pump of the transmission is driven mechanically, i.e. directly by the engine.

In the above-mentioned European patent publication it is therefore proposed to alleviate such strain by providing the transmission not only with a mechanically driven pump, but also with an electrically driven pump, e.g. driven by an electric motor that is supplied with power by the battery of the vehicle in which the transmission is applied, which latter pump may be set into operation on demand. In said publication the electrically driven pump is arranged and operated in parallel with the mechanically driven pump, whereby the mechanically driven pump provides a basic flow of pressurised hydraulic medium sufficient for steady state operation of the entire transmission, i.e. maintaining a constant transmission ratio and providing a sufficient supply of pressurised hydraulic medium to the at least one auxiliary user, and whereby the electrically driven pump provides an auxiliary flow of pressurised hydraulic medium that is additionally required for the actuation of the transmission during the said dynamic operation thereof.

A further example of the known and generic transmission is provided by EP-A-0 826 910, that discloses two pumps connect in series, whereof the upstream pump supplies hydraulic medium to the downstream pump and whereof the downstream pump supplies hydraulic medium to an outlet line for the actuation of the transmission. According to EP-A-0 826 910 either one or both of the said two pumps may be driven electrically. Also according to EP-A-0 826 910 the outlet or discharge pressure of the upstream pump may be controlled by a pressure-regulating valve, in which case a surplus of hydraulic medium fluid discharged by the said valve may be fed to a lubrication circuit or a cooling circuit of the transmission.

Although such known configuration performs reasonably well, it also shows several disadvantages that hamper widespread application of it as a generally applicable principle. The largest thereof being that the configuration shows a relatively small efficiency gain over a more conventional transmission comprising one or more mechanically driven pumps, whereas the additional cost of and effort for incorporating the electrically driven pump are quite considerable. Moreover, in this particular application of the available types of electrically driven pumps, it was found that these pumps significantly and undesirably increase the noise level generated during operation of the transmission.

It is therefore an object of the present invention to provide for an improvement of the known continuously variable transmission in which the said disadvantages are at least mitigated within the constraints of the favourably efficient combination of a mechanically and an electrically driven pump.

According to the invention the aim of the invention is realised when the features of the characterising portion of claim 1 are applied to the continuously variable transmission known from the preamble of said claim.

In such a transmission, the electrically driven pump is incorporated in series with the mechanically driven pump rather than in parallel therewith. Herewith, surprisingly and despite a requirement of an increased if not essentially continuous operation of the electrically driven pump -i.e. not only during the said dynamic operation of the transmission, but also during essentially steady state operation thereof-, an advantageous hydraulic configuration is achieved for various reasons. In the first place, the electrically driven pump is fed by, i.e. draws, hydraulic medium that has already been pressurised to a certain level by said mechanically driven pump. Amongst others this has the effect that, favourably, the pressure differential - i.e. the pressure difference between the inlet and outlet side of a pump- has been reduced for both pumps. Further, only a part of the entire flow of hydraulic medium generated during operation of the transmission is pressurised by the electrically driven pump to the highest pressure level in the system, i.e. the pressure level needed for the actuation of the transmission. Moreover, such flow part may be continuously and accurately adjusted to what is actually needed by the appropriate activation of the electrically driven pump. The remainder of the entire flow of hydraulic medium is pressurised by the mechanically driven pump only to a relatively low pressure level, which is required by the auxiliary user(s). Hereby, an increase in pumping efficiency, as well as a reduction in noise level may be realised.

This effect of noise reduction will in many cases be supported by the feaure that the occurrence of cavitation -i.e. the formation and subsequent imploding of vapour bubbles at the inlet side of a pump- is significantly reduced, if not entirely obviated, at the most critically loaded electrically driven pump. Also, the design of mechanically driven pump may be fully optimised for the pumping of a large flow of hydraulic medium and, finally, in most known layouts of the hydraulic system it may be dispensed with one pressure-regulating valve.

As an illustration of the above advantages, it is remarked that the pressure level typically required by the usually applied auxiliary users may be up to about 10 bar, while the pressure level typically required for the actuation of the transmission may be up to 60 or sometimes even 80 bar. It is further remarked that the auxiliary hydraulic users may include a clutch or coupling means of the transmission for selectively connecting the engine to the load, lubrication means for lubrication of rotating transmission parts and so-called solenoid valves for the controlled activation of other valves of the transmission.

The invention will now be elucidated further along a drawing in which:
figure 1 is a schematic representation of a prior art and to be improved continuously variable transmission,
figure 2 represents the basic hydraulic configuration of the novel transmission according to the invention,
figures 3 to 5 represent different embodiments within a first principle elaboration of the basic hydraulic configuration according to the invention;
figures 6 to 8 represent different embodiments within a second principle elaboration of the basic configuration according to the invention.

In the figures, identical references relate to corresponding technical functions or structures, as the case may be. The thick lines indicate hydraulic lines, i.e. passages for hydraulic medium, whereas the dashed lines indicate pressure control lines for the control, i.e. the biasing of the various hydraulic valves.

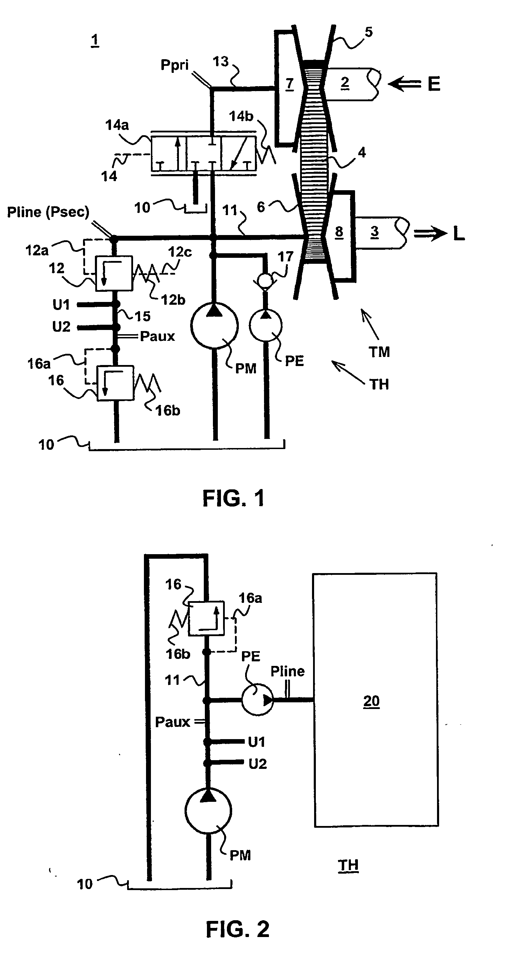

Figure 1 schematically shows a continuously variable transmission 1 comprising a mechanical system TM for realising and changing a physical transmission ratio between an input shaft 2 and an output shaft 3 of the transmission 1, and a hydraulic system TH for the operation of the transmission 1, which includes both the actuation of the said mechanical system TM and the control of any auxiliary hydraulic user U1, U2 of the transmission 1, such as a coupling means, a lubrication means and/or in some cases a solenoid valve. The transmission 1 may be incorporated between an engine E and a load L, for example in a motor vehicle, for varying a speed and torque transmission ratio between the engine E and the load L within a continuous range of possible transmission ratios.

In this particular illustrative example the mechanical system TM of the known transmission 1 comprises an endless flexible belt 4 that is wrapped around two pulleys 5 and 6, whereby each pulley is connected to either the input shaft 2 or the output or secondary shaft 3 of the transmission 1. The belt 4 is frictionally engaged with the pulley discs of a respective pulley 5, 6 by means of a clamping force that is generated by hydraulic pressure exerted in a pressure chamber 7 or 8 of a piston-and-cylinder assembly that is associated with that respective pulley 5, 6, i.e. either the so-called primary pressure chamber 7 associated with the pulley 5 connected to the input shaft 2 or the so-called secondary pressure chamber 8 associated with the pulley 6 connected to the input shaft 3.

The hydraulic system TH of the known transmission 1 comprises a mechanically driven main pump PM and an electrically driven auxiliary pump PE, which latter pump PE may be activated on demand and to a variable extent, in particular during dynamic operation of the mechanical system TM of the transmission 1. The mechanically driven pump PM on the other hand is driven directly and continuously by the engine E, the flow of medium supplied thereby thus being dependent on the engine speed. Both pumps PM, PE are arranged in parallel and are capable of supplying a flow of pressurised hydraulic medium to a first or main hydraulic line 11, whereby such medium is drawn from a reservoir 10 for hydraulic medium of the transmission 1. A one way valve 17 is provided between this main line 11 and the electrically driven pump PE, to prevent medium loss via leakage through this pump PE when it is not in operation.

The hydraulic pressure P_{LINE} in the main line 11 is regulated by a line pressure-regulating valve 12 to a level that is required in the secondary pressure chamber 8, which pressure level is referred to as the secondary pressure P_{SEC}. Hereby, the line pressure regulating valve 12 is provided with generally known valve biasing means 12a, 12b and 12c, being a pressure feedback line 12a, a mechanical spring 12b and a control pressure line 12c, and is used to allow a controlled flow of hydraulic medium from the main line 11 into an auxiliary hydraulic line 15, i.e. to discharge a surplus of the flow supplied by the mechanically driven pump PM and possibly also by the electrically driven pump PE. A further hydraulic line 13 branches-off from the main line 11 via a flow-regulating valve 14, which is used to set the pressure in that further line 13 to a level required in the primary pressure chamber 7, which pressure level is referred to as the primary pressure P_{PRI}. Hereby, the flow-regulating valve 14 is provided with generally known valve biasing means 14a and 14b, being a pressure control line 14a and a mechanical spring 14b, and is used to either a controlled flow of hydraulic medium between the main line 11 and the further line 13, for raising the primary pressure P_{PRI}, or between the main further line 13 and the reservoir 10 for lowering the primary pressure P_{PRI}. In this system, both the line pressure P_{LINE} or secondary pressure P_{SEC} and the primary pressure P_{PRI} are actively controlled to a desired level by determining control pressure levels in the said pressure control lines 12a and 14a, usually by means of solenoid-operated additional valves.

The known hydraulic system TH further comprises a second or auxiliary pressure-regulating valve 16, which is used to set the pressure level in the auxiliary hydraulic line 15 at a so-called auxiliary pressure P_{AUX} that is required for the actuation of an auxiliary hydraulic user U1, U2 of the transmission 1, such as a clutch or coupling means that is generally incorporated in the transmission 1 for selectively connecting the engine E to the load L, e.g. to enable idling of the engine E, lubrication means for lubrication of rotating transmission parts, e.g. the drive belt 4, and, at least in some cases, the above-mentioned solenoid-operated valves for the controlled activation of other valves, e.g. the above-mentioned valves 12, 14, 16 of the transmission 1. Usually, however, these solenoid valves are fed with hydraulic medium from a high(-er) pressure part of the hydraulic system TH f

The auxiliary pressure P_{AUX} may have a constant value so that the valve biasing means of the auxiliary pressure-regulating valve 16 need only comprise of a pressure feedback line 16a and a mechanical spring 16b. Any flow surplus received by the auxiliary hydraulic line 15 from the main line 11 is discharged by the auxiliary pressure-regulating valve 16 and, in this example, is directly fed into the reservoir 10.

Especially during dynamic situations wherein the volume of the above-mentioned pressure chambers 7 and 8 change to effect a change in the transmission ratio, a substantial flow of hydraulic medium is required for the operation of transmission 1, which flow is to be supplied by the pumps PM, PE. A disadvantageous feature of this known hydraulic system TH is that the entire flow of hydraulic medium supplied by the pumps is brought to the highest system pressure, i.e. the line pressure P_{LINE}, which in this particular configuration of the hydraulic system TH corresponds with the secondary pressure P_{SEC}. Still, a significant part of the flow supplied by the mechanically driven pump PM is intended for the actuation of the auxiliary users U1, U2, which typically operate at a much lower pressure level, the auxiliary pressure P_{AUX}, than what is needed for the actuation of the transmission 1. Thus a considerable mechanical pumping power is still wasted when the latter part of the said flow is depressurised from the line pressure P_{LINE} to the auxiliary pressure P_{AUX}.

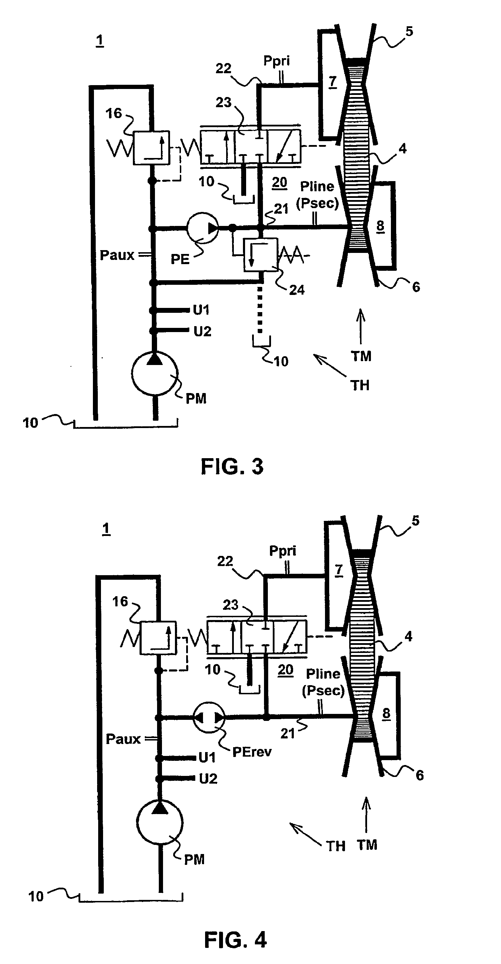

Figure 2 schematically represents the basic configuration of the novel hydraulic system TH according to the invention, which, in principle, may be favourably used in combination with any known type of mechanical continuously variable transmission system TM. Also, as will be illustrated further on with reference to the figures 3-10, the configuration according to the invention may be used in principle irrespective of the particular layout of the actuation circuit part 20 of the hydraulic system TH.

Figure 2 shows that the electrically driven pump PE is provided in series and, more in particular, downstream of the mechanically driven pump PM, whereby it draws hydraulic medium from the main line 11 and supplies it to a hydraulic actuation circuit 20 for the actuation of the transmission 1. Like the electrically driven pump PE, also the auxiliary hydraulic users U1, U2 of the transmission 1 are connected to the main line 11 and hydraulic medium is drawn therefrom for the actuation of those auxiliary hydraulic users U1, U2. In this novel basic configuration of the hydraulic system TH, the hydraulic actuation circuit 20 can be seen as a further auxiliary user, in casu user U3.

By the provision of the electrically driven pump PE between the main line 11 and the hydraulic actuation circuit 20, the pressure level in the main line 11 may now be maintained at the relatively low auxiliary pressure P_{AUX} by the auxiliary pressure-regulating valve 16, which in this configuration is set at a constant level determined by the respective valve biasing means 16a and 16b. The activation of the electrically driven pump PE may hereby be controlled in dependence on an actual, e.g. measured line pressure P_{LINE} and an instantaneous line pressure level that is required for the appropriate activation of the mechanical system part TM of the transmission, preferably so as to minimise a difference there between, but at least to set the actual line pressure P_{LINE} at a level equal to or higher than the instantaneously required pressure level. This basic configuration of the hydraulic system TH of the transmission in accordance with the invention comes with the advantages that were set out in the above.

The figures 3-5 illustrate different embodiments of a first principle elaboration of the basic hydraulic configuration according to the invention based on the known layout of the hydraulic system TH shown in figure 1, since also in this elaboration the line pressure P_{LINE} serves as the secondary pressure P_{SEC} and the primary pressure P_{PRI} is subsequently derived from the secondary pressure P_{SEC}. In the embodiments of the figures 3-5 the hydraulic actuation circuit 20 to this end comprises a first hydraulic line 21 supplied with hydraulic medium at line pressure P_{LINE} level by the electrically driven pump PE, a second hydraulic line 22 that branches-off from the first line 21 via a flow-regulating valve 23, which may be similar in structure and operation as the above-described known flow-regulating valve 14 and which is used to set the pressure in that second line 22 to the primary pressure P_{PRI} level.

Normally it is a further requirement of this layout of the hydraulic system TH that the line pressure P_{LINE} can be raised and/or lowered on demand within a preferably wide range of possible values, which in the known layout of the hydraulic system TH is realised by means of the said line pressure-regulating valve 12. In the embodiment of figure 3 a similar hydraulic layout is chosen, however, wherein the line pressure P_{LINE} may be raised by the said controlled activation of the electrically driven pump PE and lowered by a line pressure-regulating valve 24, which may be similar in structure and operation as the above-described known line pressure-regulating valve 12. In this example the line pressure-regulating valve 24 allows a controlled flow of hydraulic medium from the first line 21 back into the main line 11, whereby the line pressure P_{LINE} may be lowered down to the level of the auxiliary pressure P_{AUX.}

A still lower minimum level for the line pressure P_{LINE} would of course be possible by connecting the line pressure-regulating valve 24 directly to the reservoir 10 as is indicated in the figure by the dotted line 18. A principal further advantage of this latter layout of the hydraulic system TH compared with the known layout illustrated in figure 1 is that the primary and secondary pressures P_{PRI}, P_{SEC} can be controlled to a level below that of auxiliary pressure P_{AUX}. Hereby the efficiency of the transmission 1 may be improved even further in special operating conditions, e.g. when no or only a small engine power is to be transmitted.

Alternatively, as illustrated in the embodiment of figure 4, the line pressure-regulating valve 24 may be dispensed with, whereby the line pressure P_{LINE} is lowered by the said controlled activation of the electrically driven pump PE itself by applying a reversible type pump, i.e. an electrically driven, reversible pump PE_{REV} that is capable both of actively drawing hydraulic medium from the main line 11 and supplying it to the hydraulic actuation circuit 20 and of -at least passively, but preferably actively and controllable- allowing hydraulic medium to flow from the hydraulic actuation circuit 20 back into the main line 11.

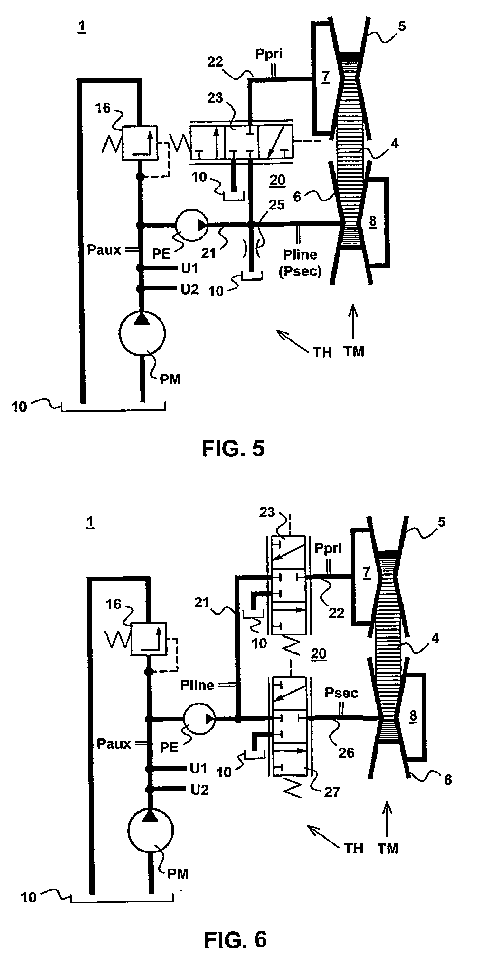

Finally, it is illustrated in a third embodiment of the first principle elaboration of the basic hydraulic configuration according to the invention shown in figure 5 that the line pressure P_{LINE} may be lowered, at least when the electrically driven pump PE is stopped, also by the incorporation of a relatively small and preferably well defined leakage 25 from the hydraulic actuation circuit 20, e.g. by means of a so-called flow restriction means 25, allowing hydraulic medium to flow into the reservoir 10. Such layout of course constitutes a relatively cheap means 25 compared with the reversible pump means PE_{REV} and even with the line pressure-regulating valve means 24.

The figures 6-8 illustrate different embodiments of a second principle elaboration of the basic hydraulic configuration according to the invention, which elaboration is based on a layout of the hydraulic circuit TH that is known per se from EP-A-0 210 663. In this elaboration the line pressure P_{LINE} is realised as a separate pressure level in the hydraulic actuation circuit 20 and both the primary pressure P_{PRI} and the secondary pressure P_{SEC} are subsequently derived therefrom. To this end the hydraulic actuation circuit 20 comprises a first hydraulic line 21 supplied with hydraulic medium at line pressure P_{LINE} level generated and controlled by the appropriate activation of the electrically driven pump PE. Accordingly, also in this principle elaboration it may be dispensed with a pressure-regulating valve, in casu the line pressure-regulating valve, in comparison with the known layout.

The hydraulic actuation circuit 20 according to the invention further comprises a second hydraulic line 22 and a third hydraulic line 26 branch-off from the first line 21 via respective flow-regulating valves 23 and 27, which may be similar in structure and operation as the above-described known flow-regulating valve 14 and which are respectively used to set the pressure level in the second line 22 at the desired primary pressure P_{PRI} and the pressure level in the third line 26 at the desired secondary pressure P_{SEC} level.

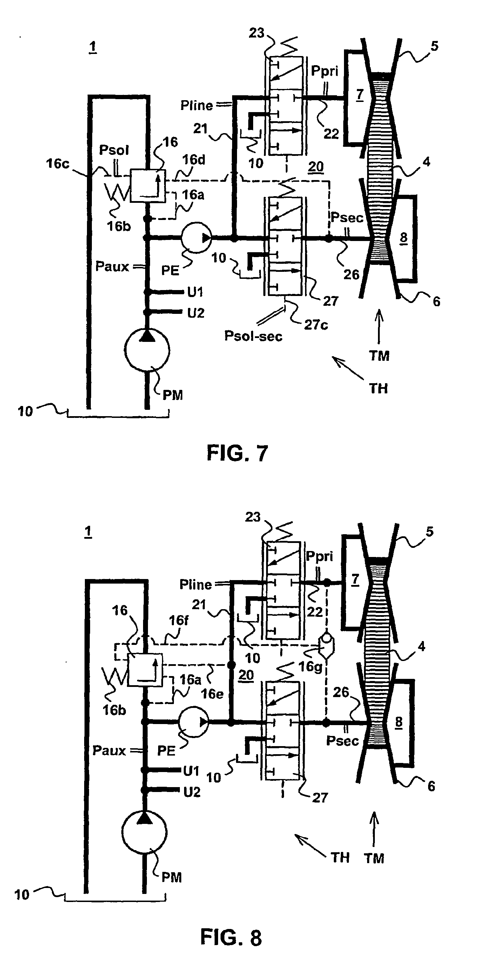

In figure 7 a modification of the figure 6 layout of the hydraulic system TH is shown, in which layout the auxiliary pressure level P_{AUX} may be temporarily raised a higher level should the electrically driven pump PE not be able to generate the desired line pressure P_{LINE} and desired flow in the hydraulic actuation circuit 20. The advantage of such modification being that the electrically driven pump PE may be smaller flow and/or pressure capacity and thus cheaper and possible more efficient, whereby at least in critical operating conditions the auxiliary pressure level P_{AUX} is raised at least temporarily by the mechanically driven pump PM, thereby assisting the electrically driven pump PE.

According to the present invention such feature may be realised by providing the valve biasing means of the auxiliary pressure-regulating valve 16 not only with the pressure feedback line 16a and the mechanical spring 16b, but also with a control pressure line 16c for allowing a control pressure P_{SOL} to act on the auxiliary pressure-regulating valve 16, so as to enable the active control of the auxiliary pressure P_{AUX} to a desired level. Alternatively, or additionally, the said feature may also be realised by passively controlling the auxiliary pressure P_{AUX} by allowing both a pressure level in the hydraulic actuation circuit 20 and a control pressure that is respectively associated with such pressure level to influence the auxiliary pressure-regulating valve 16, however in a mutually opposite manner. This latter feature is exemplified by the pressure-feedback line 16d shown in figure 7, which allows the secondary pressure P_{SEC} in the hydraulic actuation circuit 20 to act on the auxiliary pressure-regulating valve 16 and by the control pressure line 16c, which in this case allows a control pressure P_{SOL}, corresponding with a control pressure P_{SOL-SEC} associated with the secondary pressure P_{SEC} that prevails in the pressure control line 27c of the secondary pressure flow-regulating valves 27, to also act on the auxiliary pressure-regulating valve 16. It is the normally occurring lag between a change in the control pressure P_{SOL}-_{SEC} associated with the secondary pressure P_{SEC} and a corresponding change in the secondary pressure P_{SEC} itself, that, additionally and temporarily biases the auxiliary pressure-regulating valve 16 in this arrangment. Of course, these additional valve baising means 16c, 16d of the auxiliary pressure-regulating valve 16 should be arranged such that the auxiliary pressure P_{AUX} is increased thereby when an increase of the secondary pressure P_{SEC} is desired.

It is remarked these principle solutions may of course be applied in any one particular elaboration of the basic hydraulic configuration according to the invention.

In figure 8 an alternative modification of the figure 6 layout is shown for realising an appropriate passive control of the auxiliary pressure P_{AUX}. In this layout the valve biasing means of the auxiliary pressure-regulating valve 16 is passively controlled in addition to the pressure feedback line 16a and the mechanical spring 16b in dependency on the difference between the line pressure P_{LINE} and the highest of the primary and secondary pressure P_{PRI}, P_{SEC}. level in the hydraulic actuation circuit 20 to influence the auxiliary pressure-regulating valve 16, which is exemplified by the pressure-feedback lines 16e and 16f and the switch-valve 16g shown in figure 8.

## Claims

1. Continuously variable transmission (1) for transmitting a driving force of an engine (E) to a load (L) to be driven provided with a set of hydraulic pumps (PM, PE) for realising a pressurised supply of hydraulic medium, at least for the actuation of the transmission (1) within a range of transmission ratios and of at least one auxiliary hydraulic user (U1, U2) of the transmission (1), such as a coupling means (C), which set of hydraulic pumps (PM, PE) comprises a mechanically driven pump (PM), which is driveable by the said engine (E) and capable of supplying hydraulic medium from a reservoir (10) for hydraulic medium to a main hydraulic line (11) of the transmission (1), and a further pump (PE), which is capable of drawing hydraulic medium from the main hydraulic line (11) and supplying the hydraulic medium to a hydraulic actuation circuit (20) of the transmission (1) for the actuation thereof, which hydraulic actuation circuit (20) comprises at least two pressure chambers (7, 8), each associated with a respective pulley (5, 6) of the transmission (1), as well as means (PE, 21-27) for independently controlling hydraulic pressures (P_{SEC}; P_{PRI}) respectively prevailing in the at least two pressure chambers (7, 8), the transmission further being provided with an auxiliary pressure-regulating valve (16) for regulating the pressure in the main hydraulic line (11) to a desired auxiliary pressure (P_{AUX}), **characterised in that**, the further pump (PE) is driveable by an electric motor independently from the said engine (E) and **in that** the auxiliary hydraulic user (U1, U2) is supplied with hydraulic medium directly from the main hydraulic line (11) for the actuation thereof.

2. Transmission (1) according to claim 1, **characterised in that** the auxiliary pressure (P_{AUX}) is set by a control pressure (P_{SOL}) that acts on the auxiliary pressure-regulating valve (16).

3. Transmission (1) according to the claim 1 or 2, **characterised in that** the auxiliary pressure (P_{AUX}) is set in dependence of a hydraulic pressure (P_{LINE}; P_{SEC}; P_{PRI}) in the hydraulic actuation circuit (20).

4. Transmission (1) according to the claim 3, **characterised in that** the auxiliary pressure (P_{AUX}) is additionally set in dependence of a control pressure (P_{SOL-SEC}) that is respectively associated with the said hydraulic pressure (P_{LINE}; P_{SEC}; P_{PRI}) in the hydraulic actuation circuit (20), in particular in dependence on a difference between such respective pressure levels (P_{SOL-SEC}; P_{LINE}; P_{SEC}; P_{PRI}).

5. Transmission (1) according to the claim 3, **characterised in that** the auxiliary pressure (P_{AUX}) is additionally set in dependence of a further hydraulic pressure (P_{LINE}; P_{SEC}; P_{PRI}) in the hydraulic actuation circuit (20), the said hydraulic pressures (P_{LINE}; P_{SEC}; P_{PRI}) at least including the respectively highest one of the hydraulic pressures (P_{SEC}; P_{PRI}) prevailing in the pressure chambers (7, 8) of the transmission (1).

6. Transmission (1) according to any of the preceding claim, **characterised in that** an amount of medium supplied by electrically driven pump (PE) to the hydraulic actuation circuit (20) is controlled in dependence of a hydraulic pressure (P_{LINE}; P_{SEC}; P_{PRI}) in the hydraulic actuation circuit (20), in particular a highest hydraulic pressure level prevailing therein, by influencing an electric power supplied to the electric motor of the said pump (PE).

7. Transmission (1) according to any of the preceding claims, **characterised in that** the electrically driven pump (PE) is reversible.

## Patentansprüche

1. Stufenloses Getriebe (1) zur Übertragung einer Antriebskraft eines Motors (E) auf eine anzutreibende Last (L), die mit einem. Satz von hydraulischen Pumpen (PM, PE) versehen ist, um eine Druckversorgung eines hydraulischen Mediums mindestens zur Betätigung des Getriebes (1) in einem Bereich von Übersetzungsverhältnissen und mindestens eines hydraulischen Nebenverbrauchers (U1, U2) des Getriebes (1), wie zum Beispiel eines Kopplungsmittels (C), zu realisieren, wobei der Satz von hydraulischen Pumpen (PM, PE) eine mechanisch angetriebene Pumpe (PM), die von dem Motor (E) angetrieben werden kann und einer Haupthydraulikleitung (11) des Getriebes (1) ein hydraulisches Medium von einem Behälter (10) für hydraulisches Medium zuführen kann, und eine weiteren Pumpe (PE) umfasst, die hydraulisches Medium aus der Haupthydraulikleitung (11) ansaugen kann und einem hydraulischen Betätigungskreis (20) des Getriebes (1) zu dessen Betätigung das hydraulische Medium zuführen kann, wobei der hydraulische Betätigungskreis (20) mindestens zwei Druckkammern (7, 8), die jeweils einer jeweiligen Riemenscheibe (5, 6) des Getriebes (1) zugeordnet sind, sowie Mittel (PE, 21 - 27) zur unabhängigen Steuerung hydraulischer Drücke (P_{SEC}; P_{PRI}), die jeweils in den mindestens zwei Druckkammern (7, 8) vorherrschen, umfasst, wobei das Getriebe weiterhin mit einem Nebendruckregelventil (16) zur Regelung des Drucks in der Haupthydraulikleitung (11) auf den gewünschten Nebendruck (P_{AUX}) versehen ist, **dadurch gekennzeichnet, dass** die weitere Pumpe (PE) durch einen Elektromotor unabhängig von dem Motor (E) angetrieben werden kann und dass der hydraulische Nebenverbraucher (U1, U2) mit hydraulischem Medium direkt von der Haupthydraulikleitung (11) zu seiner Betätigung versorgt wird.

2. Getriebe (1) nach Anspruch 1, **dadurch gekennzeichnet, dass** der Nebendruck (P_{AUX}) durch einen Steuerdruck (PSOL) eingestellt wird, der auf das Nebendruckregelventil (16) wirkt.

3. Getriebe (1) nach Anspruch 1 oder 2, **dadurch gekennzeichnet, dass** der Nebendruck (P_{AUX}) in Abhängigkeit von einem hydraulischen Druck (P_{LINE}; P_{SEC}, P_{PRI}) in dem hydraulischen Betätigungskreis (20) eingestellt wird.

4. Getriebe (1) nach Anspruch 3, **dadurch gekennzeichnet, dass** der Nebendruck (P_{AUX}) darüber hinaus in Abhängigkeit von einem Steuerdruck (P_{SOL}-_{SEC}) , der jeweils dem hydraulischen Druck (P_{LINE}; P_{SEC}, P_{PRI}) in dem hydraulischen Betätigungskreis (20) zugeordnet ist, insbesondere in Abhängigkeit von einer Differenz zwischen solchen jeweiligen Druckhöhen (P_{SOL-SEC}; P_{LINE}; P_{SEC}, P_{PRI}), eingestellt wird.

5. Getriebe (1) nach Anspruch 3, **dadurch gekennzeichnet, dass** der Nebendruck (P_{AUX}) darüber hinaus in Abhängigkeit von einem weiteren hydraulischen Druck (P_{LINE}; P_{SEC}, P_{PRI}) in dem hydraulischen Betätigungskreis (20) eingestellt wird, wobei die hydraulischen Drücke (P_{LINE}; P_{SEC}, P_{FRI}) mindestens den jeweils höchsten der hydraulischen Drücke (P_{SEC}; P_{PRI}), die in den Druckkammern (7, 8) des Getriebes (1) vorherrschen, enthalten.

6. Getriebe (1) nach einem der vorhergehenden Ansprüche, **dadurch gekennzeichnet, dass** eine durch die elektrisch angetriebene Pumpe (PE) dem hydraulischen Betätigungskreis (20) zugeführte Mediummenge in Abhängigkeit von einem hydraulischen Druck (P_{LINE}; P_{SEC}, P_{PRI}) in dem hydraulischen Betätigungakreis (20), insbesondere einer darin vorherrschenden größten Höhe des hydraulischen Drucks, gesteuert wird, indem eine dem Elektromotor der Pumpe (PE) zugeführte elektrische Energie beeinflusst wird.

7. Getriebe (1) nach einem der vorhergehenden Ansprüche, **dadurch gekennzeichnet, dass** die elektrisch angetriebene Pumpe (PE) umsteuerbar ist.

## Revendications

1. Transmission à variation continue (1) pour transmettre une force d'entraînement d'un moteur (E) à une charge (L) à entraîner, pourvue d'un ensemble de pompes hydrauliques (PM, PE) pour produire une alimentation sous pression de fluide hydraulique, au moins pour l'actionnement de la transmission (1) dans une plage de rapports de transmission et d'au moins un utilisateur hydraulique auxiliaire (U1, U2) de la transmission (1), comme un moyen de couplage (C), lequel ensemble de pompes hydrauliques (PM, PE) comprend une pompe entraînée mécaniquement (PM), qui peut être entraînée par ledit moteur (E) et qui est capable de fournir du fluide hydraulique à partir d'un réservoir (10) de fluide hydraulique à une ligne hydraulique principale (11) de la transmission (1), et une pompe supplémentaire (PE), qui est capable d'aspirer du fluide hydraulique de la ligne hydraulique principale (11) et de fournir le fluide hydraulique à un circuit d'actionnement hydraulique (20) de la transmission (1) en vue de son actionnement, lequel circuit d'actionnement hydraulique (20) comprend au moins deux chambres de pression (7, 8) associées chacune à une poulie respective (5, 6) de la transmission (1) ainsi que des moyens (PE, 21-27) pour contrôler indépendamment les pressions hydrauliques (P_{SEC} ; P_{PRI}) régnant respectivement dans les au moins deux chambres de pression (7, 8), la transmission étant en outre pourvue d'une soupape de régulation de pression auxiliaire (16) pour réguler la pression dans la ligne hydraulique principale (11) à une pression auxiliaire souhaitée (P_{AUX}), **caractérisée en ce que** la pompe supplémentaire (PE) peut être entraînée par un moteur électrique indépendamment dudit moteur (E) et **en ce que** l'utilisateur hydraulique auxiliaire (U1, U2) est alimenté en fluide hydraulique directement depuis la ligne hydraulique principale (11) en vue de son actionnement.

2. Transmission (1) selon la revendication 1, **caractérisée en ce que** la pression auxiliaire (P_{AUX}) est fixée par une pression de contrôle (P_{SOL}) qui agit sur la soupape de régulation de pression auxiliaire (16).

3. Transmission (1) selon la revendication 1 ou 2, **caractérisée en ce que** la pression auxiliaire (P_{AUX}) est fixée en fonction d'une pression hydraulique (P_{LINE} ; P_{SEC} ; P_{PRI}) dans le circuit d'actionnement hydraulique (20).

4. Transmission (1) selon la revendication 3, **caractérisée en ce que** la pression auxiliaire (P_{AUX}) est fixée en outre en fonction d'une pression de contrôlé (P_{SOL-SEC}) qui est associée respectivement à ladite pression hydraulique (P_{LINE} ; P_{SEC} ; P_{PRI}) dans le circuit d'actionnement hydraulique (20), en particulier en fonction d'une différence entre de tels niveaux de pression respectifs (P_{SOL-SEC} ; P_{LINE} ; P_{SEC} ; P_{PRI}) .

5. Transmission (1) selon la revendication 3, **caractérisée en ce que** la pression auxiliaire (P_{AUX}) est en outre fixée en fonction d'une pression hydraulique supplémentaire **(**P_{LINE} **;** P_{SEC} ; P_{PRI}) dans le circuit d'actionnement hydraulique (20), lesdites pressions hydrauliques (P_{LINE} ; P_{SEC} ; P_{PRI}) comportant au moins la plus élevée desdites pressions hydrauliques (P_{SEC} ; P_{PRI}) régnant dans les chambres de pression (7, 8) de la transmission (1).

6. Transmission (1) selon l'une quelconque des revendications précédentes, **caractérisée en ce qu'**une quantité de fluide fournie par une pompe entraînée électriquement (PE) au circuit d'actionnement hydraulique (20) est contrôlée en fonction d'une pression hydraulique (P_{LINE} ; P_{SEC} ; P_{PRI}) dans le circuit d'actionnement hydraulique (20), en particulier un niveau de pression hydraulique le plus élevé régnant dans celui-ci, en influençant une alimentation électrique fournie au moteur électrique de ladite pompe (PE).

7. Transmission (1) selon l'une quelconque des revendications précédentes, **caractérisée en ce que** la pompe entraînée électriquement (PE) est réversible.
